# EUROPEAN PATENT APPLICATION

(11) **EP 2 871 845 A1**
(43) Date of publication of application: **13.05.2015**
(21) Application number: 13813961.3
(22) Date of filing: 04.07.2013
(51) Int. Cl.: H04N 19/119

(54) **METHOD FOR ENCODING A DIGITAL VIDEO IMAGE**

(30) Priority: 05.07.2012 RU 2012127891
(71) Applicant: Yaroshenko, Vadim Vitalievich, Moscow 121315 (RU)
(72) Inventor: Yaroshenko, Vadim Vitalievich, Moscow 121315 (RU)
(74) Representative: Smirnov, Alexander
(86) International application number: PCT/RU2013/000569
(87) International publication number: WO 2014/007683

(57) **Abstract**

Digital video encoding method pertains to the area of digital technologies and can be used for efficient encoding of video data in video file formats, as well as in stream and broadcast video formats.

The technical result of the claimed invention is aimed at increasing the quality of the digital video obtained by encoding the source digital video.

Digital video encoding method includes stages where the source digital video is encoded, and the source digital video can be provided in any formats and with any resolutions exceeding the required ones. At the encoding stage, the source digital video is divided into a set of video frames, and each video frame from this set of video frames is divided into a set of blocks consisting of pixels, then the digital video is generated from the video frames sequence as follows: Every subsequent frame is added to the encoded video, if it is completely different from the previous video frame; if every subsequent video frame repeats the previous video frame, then the command to repeat the previous frame is added to the digital video being generated, instead of the subsequent video frame; if every subsequent video frame differs not completely, then the command to repeat the previous frame with consideration of differing blocks is added to the digital video being generated; the encoding is carried out in such a way as to keep square pixel shape in the encoded video, regardless of compression ratio; the encoded video is saved on at least one media server. In the obtained encoded digital video, the aspect ratio is a multiple of the aspect ratio of the corresponding display device, and the multiplicity can be either integer or fractional number.

## Description

This invention pertains to methods of digital video encoding and can be used for efficient encoding of video data in video file formats, as well as in stream and broadcast video formats.

The digital image, such as video, TV image, static image or image generated using VCR or PC, contains of pixels located along horizontal and vertical lines. One image frame usually contains tens of thousands pixels. Each pixel usually contains information on brightness and color. The unencrypted digital image contains a big amount of information. A number of encoding methods, such as the JPEG, MPEG, and H.263 standards, were developed in order to decrease the amount of data to be transferred. Typical video encoder divides frames of the source video sequence into rectangular areas or blocks that are encoded in internal or intermediate mode. Blocks are encoded independently, using a certain type of transformation coding, such as Discrete Cosine Transformation (DCT) method.

However, encoding involving division of frames of the source video sequence into rectangular areas or blocks has some disadvantages. One of these disadvantages is quality loss of the digital video image.

The technical result of the claimed invention is aimed at increasing the quality of the digital video obtained by encoding the source digital video.

This technical result is achieved by encoding the source digital video, where the source digital video can be provided in any formats and with any resolutions exceeding the required ones, e.g.:
- Apple ProRes 4444
- Apple ProRes 422 (HQ)
- Apple ProRes 422
- Apple ProRes 422 (LT)
- Apple ProRes 422 (Proxy)
- Full HD (1920x1080)
- HD (1280x720) etc.

At the encoding stage, the source digital video is divided into a set of video frames, and each video frame from this set of video frames is divided into a set of blocks consisting of pixels.

At least one encoded video is generated from the video frame sequence according to the following procedure:
- Every subsequent frame is added to the encoded video, if it is completely different from the previous video frame.
- If every subsequent video frame repeats the previous video frame, then the command to repeat the previous frame is added to the digital video being generated, instead of the subsequent video frame.
- If every subsequent video frame partially repeats the previous video frame, then the command to repeat the previous frame with consideration of differing blocks is added to the digital video being generated.
- The encoding is carried out in such a way as to keep square pixel shape in the encoded video, regardless of compression ratio.
- The video frame aspect ratio multiplicity of the encoded digital video can be arbitrary, if the pixel shape remains square, however, it is recommended to make the video frame aspect ratio of the encoded video multiple of the display device aspect ratio, in order to ensure the optimum quality of the digital video.

In this case, the multiplicity can be either integer or fractional number. - If pixel shape remains square, then the encoded digital image bit rate can be substantially decreased, regardless of the compression ratio, without any quality loss of the encoded digital image, hence, it is possible to considerably decrease the encoded digital image file size, which is directly proportional to the bit rate (File size = Bit rate x File length) without quality loss.

The obtained encoded video is saved on at least one media server.

An example of the video frame aspect ratio multiplicity in encoded digital video with respect to video frame size of the Full HD display device (1920x1080) is given in the following table:

**Table 1.**

| **Resolution** | **Relation to FULL HD** |
|---|---|
| 1920×1080 | 1 Full HD resolution |
| 1280×720 | 1/2 Full HD resolution |
| 1024×576 | 1/3.52 Full HD resolution |
| 960×540 | 1/4 Full HD resolution |
| 640×360 | 1/9 Full HD resolution |
| 480×270 | 1/16 Full HD resolution |
| 320×180 | 1/36 Full HD resolution |
| 240×135 | 1/64 Full HD resolution |

If the pixel shape remains square in the encoded digital video, and video frame aspect ratio of the encoded digital video picture corresponds to video frame size of the Full HD display device (1920x1080), it is possible to achieve the claimed technical result, which allows:
- Displaying the encoded digital video of optimum quality on any device type that supports such view, since this method covers the most popular technical solutions, such as smartphone, tablet PC, laptop, desktop monitor, TV screen, etc.
- Deliver encoded digital video of high resolution and optimum quality to the user at low data transfer rates, e.g.:
   a) Full HD (1920x1080) at transfer rate less than 5 Mbit/s;
   b) HD (1280x720) at transfer rate less than 2 Mbit/s;
   c) etc.

All method stages revealed in this invention can be explicitly implemented by means of computers or as a software (SW) module executed by CPU. SW module can be stored in RAM, flash memory, ROM, permanent memory, EROM, EEPROM, register, on hard disc, removable disc, CD-ROM, or any other existing storage media. On the other hand, storage medium can be integrated into CPU. CPU and storage medium can be located in a specialized integrated circuit. Specialized integrated circuit can be located in user terminal. Alternatively, the storage medium and CPU can be located in user terminal as individual components.

Digital video encoding method revealed in this invention consists of several stages or actions implementing the described method. The sequence of stages or actions can be changed without going beyond the scope of this invention.

Expert in this subject matter should understand that this method is not limited by specific stages and actions revealed in this invention.

## Claims

1. Digital video encoding method that contains stages, wherein:
source digital video is encoded, and the source digital video is provided in any formats and with any resolutions exceeding required ones;
at the encoding stage, the source digital video is divided into a set of video frames, and each of video frames of this set is divided into a set of pixel blocks consisting of pixels;
encoded digital video is generated based on the video frame sequence as follows:
- each subsequent frame is added to the encoded video, if it is completely different from the previous video frame;
- If every subsequent video frame repeats the previous video frame, then the command to repeat the previous frame is added to the digital video being generated, instead of the subsequent video frame;
- If a subsequent video frame differs not completely, then the command to repeat the previous frame with consideration of differing blocks is added to the digital video being generated;
- the encoding is carried out in such a way as to keep square pixel shape in the encoded video, regardless of compression ratio;
- the encoded video is saved on at least one media server.

2. The encoding method of claim 1 **characterized in that** the aspect ratio of the obtained encoded digital video is a multiple of the aspect ratio of the corresponding display device, and the multiplicity can be either integer or fractional number.
